# EUROPÄISCHE PATENTSCHRIFT

(11) **EP 1 894 803 B1**
(45) Veröffentlichungstag und Bekanntmachung des Hinweises auf die Patenterteilung: **08.08.2018**
(21) Anmeldenummer: 07012500.0
(22) Anmeldetag: 26.06.2007
(51) Int. Cl.: B60T 11/228, B60T 11/236, F16J 15/56

(54) **Dichtelement für einen Bremszylinder einer Fahrzeugbremsanlage**
Seal element for the brake cylinder of a vehicle braking system
Elément d'étanchéité pour un cylindre de frein d'une installation de frein de véhicule

(30) Priorität: 30.08.2006 DE 102006040487
(43) Veröffentlichungstag der Anmeldung: 05.03.2008
(73) Patentinhaber: Lucas Automotive GmbH, 56070 Koblenz (DE)
(72) Erfinder: Struschka, Martin, 56112 Lahnstein (DE)
(74) Vertreter: Thum, Bernhard

(56) Entgegenhaltungen:
- JP-A- H10 297 463
- JP-A- 2004 231 093
- MX-A- PA06 001 733
- US-A1- 2003 094 765

## Beschreibung

### GEBIET DER ERFINDUNG

Die vorliegende Erfindung betrifft ein Dichtelement zur Abdichtung eines in einem Gehäuse eines Bremszylinders beweglich angeordneten Druckkolbens, das in eine in dem Gehäuse vorgesehene ringförmige Nut einsetzbar ist. Das Dichtelement umfasst eine Außendichtlippe zur Anlage an einen Boden der ringförmigen Nut, eine Innendichtlippe zur Anlage an den Druckkolben sowie einen Dichtelementrücken. Die Erfindung betrifft ferner einen Bremszylinder, insbesondere für hydraulische Kraftfahrzeugbremsanlagen, in den ein derartiges Dichtelement zur Abdichtung eines beweglich angeordneten Druckkolbens eingesetzt ist.

### HINTERGRUND DER ERFINDUNG

Ein Dichtelement sowie ein Bremszylinder der eingangs erwähnten Art sind beispielsweise in der WO 2005/019007 beschrieben. Der Rückenabschnitt des Dichtelements wird bei der Verschiebung des Druckkolbens und des dadurch erfolgten Hydraulikdruckaufbaus in der Druckkammer des Bremszylinders an die seitliche Wandung der ringförmigen Nut gepresst, in die das Dichtelement eingesetzt ist. Hierdurch wird zusätzlich zur dynamischen Abdichtung des beweglich angeordneten Druckkolbens durch die Innendichtlippe sowie zur Abdichtung der ringförmigen Nut durch die Außendichtlippe ein zusätzlicher, zumindest vorübergehend permanenter dichtender Bereich geschaffen. Dieser eine Dichtfunktion erfüllende Bereich zwischen dem Dichtelementrücken und der Nutwandung verhindert zumindest vorübergehend, dass bei der Rückhubbewegung des Druckkolbens durch Lösen der Bremse Flüssigkeit aus dem Flüssigkeitsreservoir durch die Nut in die Druckkammer nachströmen kann (sog. Überströmen), um so den notwendigen Druckausgleich zwischen der Druckkammer und dem Flüssigkeitsreservoir zu erzeugen. Erst wenn die in dem Druckkolben vorgesehenen Nachlaufbohrungen nicht mehr von der Innendichtlippe des Dichtelements verschlossen sind, kann Flüssigkeit durch die Nachlaufbohrungen in die Druckkammer des Bremszylinders strömen.

Wird die Bremse durch schnelles Zurücknehmen des Bremspedals schlagartig gelöst, kann es auf Grund der schnellen Rückhubbewegung des Druckkolbens vorübergehend zu einem raschen Druckabfall innerhalb der Druckkammer des Bremszylinders kommen, da zwischen dem Dichtelementrücken und der Wandung der Nut ein dichtender Bereich bestehen bleibt, der ein Überströmen des Dichtelements für den notwendigen Druckausgleich verhindert. Dabei kann es zu einem deutlichen Unterdruck in der Druckkammer verglichen mit dem Atmosphärendruck in dem drucklosen Flüssigkeitsreservoir kommen. Dieser Druckunterschied zwischen der Druckkammer und dem Flüssigkeitsreservoir wird ausgeglichen, sobald Flüssigkeit aus dem Flüssigkeitsreservoir durch die in dem Druckkolben vorgesehenen Nachlaufbohrungen in die Druckkammer des Bremszylinders strömen kann. Da dieser Druckausgleich sehr rasch passiert, kann es zu strömungsakustischen Geräuschen kommen, die im Fahrgastraum hörbar sind. Dieser Druckausgleich kann zusätzlich mit Kavitationseffekten einhergehen, die zu einem erhöhten Verschleiß oder zu Beschädigungen führen können.

Aus DE 10 2004 057 253 A1 ist eine Dichtmanschette zur Abdichtung eines in einem Hauptzylinder eines Fahrzeugbremssystems angeordneten Druckkolbens bekannt. Der Dichtmanschettenrücken weist durchgehende Überstände oder Nuten auf, um beim schnellen Zurückstellen des Druckkolbens ein Anhaften der Druckmanschette an der Wandung der Nut zu vermeiden.

Ein weiteres ringförmig ausgebildetes Dichtelement ist in der veröffentlichten Fassung der deutschen Patentanmeldung DE 196 15 157 A1 beschrieben. Das ringförmige Dichtelement ist für ein Zentralventil eines Hauptzylinders einer hydraulischen Bremsanlage vorgesehen, und weist ein erstes Teil aus einem Elastomermaterial und ein zweites Teil aus einem starren Material auf. Das elastomere erste Teil umfasst kalottenförmige Erhebungen, die jeweils genau über stiftförmigen, in axialer Richtung verlaufenden Fortsätzen des starren zweiten Teils vorgesehen sind. Die kalottenförmigen Erhebungen dienen dazu, bei einem Antischlupfregelzyklus das Zentralventil auch gegen einen hohen Überdruck zuverlässig und unter Einhaltung eines genau definierten Öffnungszeitpunktes in Bezug auf die Stellung des Kolbens zu öffnen.

Der Erfindung liegt daher die Aufgabe zugrunde, ein verbessertes Dichtelement für einen Bremszylinder einer Kraftfahrzeugbremsanlage vorzusehen, das die beim schnellen Lösen der Bremse aufgrund des raschen Druckausgleichs zwischen der Druckkammer und dem Flüssigkeitsreservoir entstehenden strömungsakustischen Geräusche vermeidet und bei Ausfall der Dichtfunktion der Außendichtlippe weiterhin eine hinreichende Abdichtung zwischen Gehäusenut und Druckkolben gewährleistet.

### ZUSAMMENFASSUNG DER ERFINDUNG

Diese Aufgabe wird durch den Gegenstand der Patentansprüche 1 und 10 gelöst.

Gemäß einem ersten Aspekt der Erfindung ist ein Dichtelement zur Abdichtung eines in einem Gehäuse eines Bremszylinders beweglich angeordneten Druckkolbens vorgesehen, das in eine in dem Gehäuse vorgesehene ringförmige Nut einsetzbar ist, wobei das Dichtelement eine Außendichtlippe zur Anlage an einen Boden der ringförmigen Nut, eine Innendichtlippe zur Anlage an den Druckkolben und einen Dichtelementrücken aufweist, auf dem mindestens ein nichtdichtendes Abstandselement vorgesehen ist. Erfindungsgemäß wird die Aufgabe dadurch gelöst, dass auf dem Dichtelementrücken ein Dichtring vorgesehen ist, der radial innenliegend von dem Abstandselement angeordnet ist, wobei das Abstandselement den Dichtring in axialer Richtung überragt.

Von Bedeutung ist, dass der voranstehend beschriebene vorübergehend permanente dichtende Bereich zwischen dem Dichtelementrücken und der Nutwandung, der durch Ansaugen des Dichtelementrückens an die Nutwandung aufgrund des Druckaufbaus in der Druckkammer entsteht, durch das Abstandselement vermieden wird, wodurch ein Überströmen des Dichtelements bereits zu einem Zeitpunkt möglich ist, zu dem die Nachlaufbohrungen des Druckkolbens weiterhin von der Innendichtlippe des Dichtelements abgedichtet sind. Ein Überströmen des Dichtelements mit Druckmittel wird dadurch in einem sehr frühen Stadium der Rückhubbewegung des Druckkolbens ermöglicht, da das erfindungsgemäße Abstandselement nichtdichtend ist und der Druckausgleich, verglichen mit der Situation eines Dichtelements ohne nichtdichtendes Abstandselement, zu einem früheren Zeitpunkt stattfindet. Dadurch werden die strömungsakustischen Geräusche aufgrund des sonst sehr rasch stattfindenden Druckausgleichs zumindest verringert oder vermieden.

Gemäß der Erfindung ist ein Dichtring auf dem Dichtelementrücken angeordnet. Dieser Dichtring steht in axialer Richtung von dem Dichtelementrücken hervor und stellt eine Redundanz zur Dichtfläche der Außendichtlippe dar. Diese Redundanz ist insbesondere dann von Bedeutung, wenn durch Beschädigung oder Schmutzpartikel im Druckmittel die Außendichtlippe keine hinreichende Dichtung mehr gewährleisten kann. In einem solchen Fall wird zunächst das Abstandselement in Anlage mit der Wandung der ringförmigen Nut gebracht. Wird der Druck weiter erhöht, wird das federelastische Abstandsmittel zusammengedrückt. Schließlich wird der auf dem Dichtelementrücken vorgesehene Dichtring in Anlage mit der Wandung der ringförmigen Nut gebracht, wodurch die ringförmige Nut abgedichtet wird. Dabei sorgt die während der elastischen Verformung in dem Abstandselement gespeicherte Energie beim Unterschreiten des auf den Dichtring wirkenden Drucks dafür, dass sich der Dichtring wieder von der Wandung der ringförmigen Nut lösen kann, um so erneut einen Durchgang für das Druckmittel entlang des Dichtelementrückens herzustellen. Der Dichtring ist radial innenliegend von dem Abstandselement angeordnet.

In vorteilhafter Weiterbildung der Erfindung ist das Abstandselement erhaben auf dem Dichtelementrücken ausgebildet. Es ist allerdings ebenso in Betracht gezogen worden, dass der Dichtelementrücken in radialer Richtung durchgehend verlaufende nutenförmige Ausnehmungen aufweisen kann, durch die Druckmittel strömen kann, um ein Überströmen des Dichtelements auch bei Anlage des Abstandselements an die Nutwandung zu ermöglichen.

Bei einer bevorzugten Ausgestaltung der Erfindung ist das Abstandselement einteilig mit dem Dichtelement ausgebildet. Dadurch kann das Dichtelement sowie das auf dem Dichtelementrücken vorgesehene Abstandselement in einem Herstellungsverfahren, beispielsweise durch ein Spritzgießverfahren, hergestellt werden. Somit wird die Herstellung solcher Dichtelemente wesentlich vereinfacht und die Herstellungskosten verringert.

Vorzugsweise ist das Abstandselement federelastisch ausgebildet.

Nach einer vorteilhaften Weiterbildung der Erfindung sind eine Vielzahl von Abstandselementen in gleichen Winkelabständen zueinander auf dem Dichtelementrücken angeordnet. Durch die in gleichen Winkelabständen zueinander angeordneten Abstandselemente kann das Dichtelement im Bereich der Außendichtlippe gleichmäßig überströmt werden. Damit verteilt sich die für den Druckausgleich erforderliche Druckmittelmenge gleichmäßig über den gesamten Umfang der Außendichtlippe. Die Strömungsgeschwindigkeit des Druckmittels ist somit wegen des vergrößerten Strömungsquerschnitts verringert, was wiederum die strömungsakustischen Geräusche beim Druckausgleich herabsetzt.

Eine besonders einfache Ausgestaltung des Dichtelements wird dadurch erzielt, dass die Vielzahl von Abstandselementen kreisförmig auf dem Dichtelementrücken angeordnet sind.

Vorzugsweise ist zwischen der Außendichtlippe und der Innendichtlippe ein Stützring angeordnet, der zur Robustheit des Dichtelements beiträgt. Der Stützring kann entweder als separates Bauteil oder integral mit dem Dichtelement ausgebildet sein. Bei Ausbildung als separates Bauteil besitzt der Stützring eine höhere Festigkeit als das Material, aus dem die Innendichtlippe und die Außendichtlippe des Dichtelements hergestellt sind.

Nach einer weiteren bevorzugten Ausführungsform der Erfindung überragt der Stützring in axialer Richtung die Außendichtlippe und die Innendichtlippe. Dadurch wird gewährleistet, dass keine Verschiebung des gesamten Dichtelements aufgrund eines Druckunterschieds zwischen dem Druckmittelreservoir und der Druckkammer in axialer Richtung erfolgt, so dass eine unerwünschte Anlage der statisch beanspruchten Außendichtlippe und der dynamisch beanspruchten Innendichtlippe an der Wandung der ringförmigen Nut unterbunden werden kann.

Vorzugsweise ist wenigstens ein Durchbruch an dem freien axialen Ende des Stützrings vorgesehen.

Ein zweiter Aspekt der Erfindung betrifft einen Bremszylinder, insbesondere für hydraulische Kraftfahrzeugbremsanlagen, der mindestens einen in einem Gehäuse des Bremszylinders beweglich angeordneten Druckkolben und ein in einer ringförmigen Nut des Gehäuses vorgesehenes Dichtelement umfasst, wobei das Dichtelement eine Außendichtlippe zur Anlage an einen Boden der ringförmigen Nut, eine Innendichtlippe zur Anlage an den Druckkolben und einen Dichtelementrücken aufweist, auf dem mindestens ein nichtdichtendes Abstandselement vorgesehen. Erfindungsgemäß ist auf dem Dichtelementrücken ein Dichtring vorgesehen ist, der radial innenliegend von dem Abstandselement angeordnet ist, wobei das Abstandselement den Dichtring in axialer Richtung überragt.

Im Hinblick auf die Unterdrückung der strömungsakustischen Geräusche, die bei einem herkömmlichen Bremszylinder aufgrund des raschen Druckausgleichs zwischen der Druckkammer und dem Druckmittelreservoir auftreten, ist von Bedeutung, dass auf dem Dichtelementrücken des Dichtelements ein nichtdichtendes Abstandselement vorgesehen ist, beispielsweise in der Form federelastisch ausgebildeter Gummisegmente. Diese federelastisch ausgebildeten Gummisegmente übernehmen dann die Funktion nichtdichtender Abstandselemente und ermöglichen ein Überströmen der Außendichtlippe während der Rückhubbewegung des Druckkolbens bereits zu einem Zeitpunkt, zu dem die in dem Druckkolben vorgesehenen Nachlaufbohrungen weiterhin durch die Innendichtlippe verschlossen sind.

### KURZE BESCHREIBUNG DER ZEICHNUNGEN

Nachstehend wird die Erfindung beispielhaft anhand einer bevorzugten Ausführungsform unter Bezugnahme auf die beigefügten Zeichnungen beschrieben. Es stellen dar:
- Fig. 1: einen Axialschnitt durch einen im Gleichgewichtszustand befindlichen Bremszylinder, in dem in einer ringförmigen Nut des Bremszylindergehäuses ein Dichtelement gemäß der Erfindung untergebracht ist;
- Fig. 2: einen Axialschnitt durch den in Fig. 1 gezeigten Bremszylinder, wobei der Bremszylinder sich in einem Nichtgleichgewichtszustand befindet;
- Fig. 3: eine Draufsicht auf den Dichtelementrücken des in Fig. 1 und Fig. 2 gezeigten Dichtelements;
- Fig. 4: einen Axialschnitt durch das in Fig. 1 und Fig. 2 gezeigte Dichtelement.

### BESCHREIBUNG EINER BEVORZUGTEN AUSFÜHRUNGSFORM DER ERFINDUNG

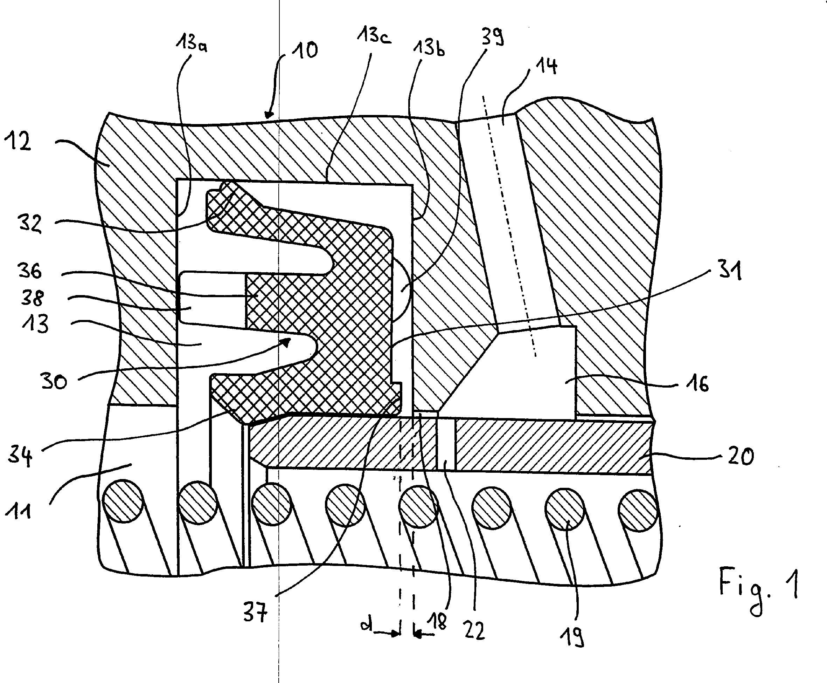

Fig. 1 zeigt in axialer Schnittansicht einen Bremszylinder, der beispielsweise als Hauptbremszylinder 10 für hydraulische Kraftfahrzeugbremsanlagen in Plunger- oder Tandembauweise ausgebildet sein kann. Im Falle eines Tandem-Hauptbremszylinders sind die zwei hintereinander angeordneten Druckkreise bezüglich ihres Aufbaus und ihrer Funktionsweise nahezu identisch. Die folgende Beschreibung beschränkt sich deshalb lediglich auf einen Druckkreis. Im folgenden werden nur die im Hinblick auf die Erfindung relevanten Merkmale des Hauptbremszylinders 10 beschrieben, da die Funktionsweise derartiger Hauptbremszylinder dem Fachmann bekannt ist.

Die Fig. 1 zeigt in einer axialen Schnittansicht einen Hauptbremszylinder 10, der ein zylindrisch ausgebildetes Gehäuse 12 aufweist, in dem ein Druckkolben 20 verschiebbar angeordnet ist. Der Druckkolben 20 wird unter Zwischenschaltung eines nicht gezeigten Bremskraftverstärkers von einem Bremspedal mit einer Kraft beaufschlagt. Ist der Hauptbremszylinder 10 in Tandem-Bauweise aufgebaut, wird die Bewegung des Druckkolbens 20 durch die Hydrauliksäule auf einen nicht gezeigten zweiten Druckkreis übertragen.

Das Gehäuse 12 weist einen Druckmittelkanal 14 auf, der mit einem nicht dargestellten Druckmittelreservoir verbunden ist. Von dem Druckmittelkanal 14 gelangt das Druckmittel in einen Zwischenraum 16 und von dort durch in dem Druckkolben 20 vorgesehene Nachlaufbohrungen 22 in eine Druckkammer 11.

Eine Dichtmanschette (Dichtelement) 30 ist in einer ringförmigen Nut 13 des Gehäuses 12 untergebracht. Die ringförmige Nut 13 weist zwei Nutwandungen 13a, 13b sowie einen Nutboden 13c auf. Zwischen der Nutwandung 13b und dem Zwischenraum 16 ist ein Durchgang 18 vorgesehen, durch den Druckmittel in die Nut 13 strömen kann.

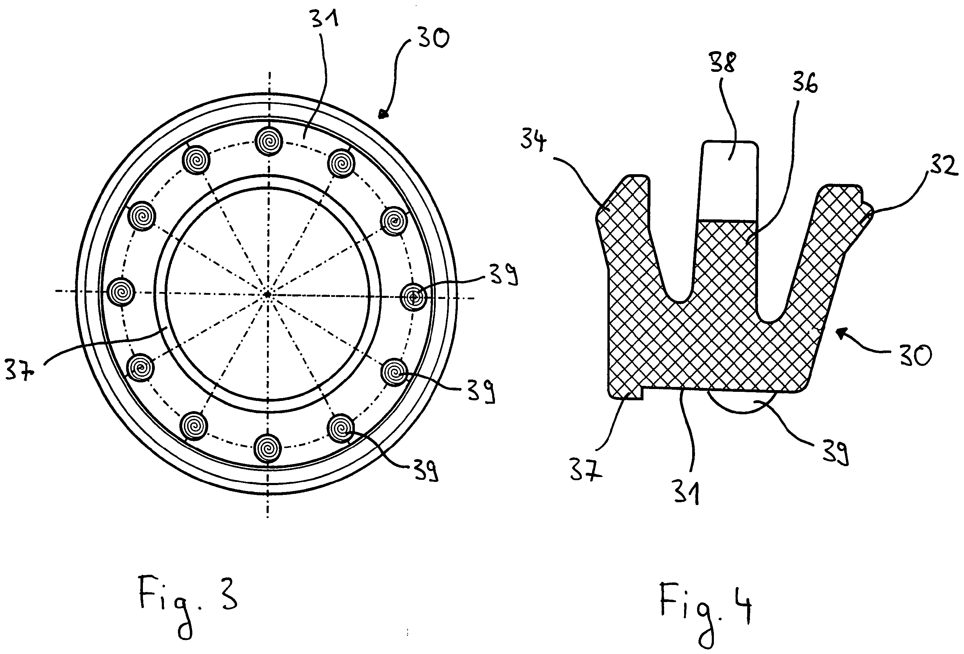

Mit Bezug auf die Fig. 4 umfasst die Dichtmanschette 30 eine Außendichtlippe 32 mit einem an ihrer radial äußeren Seite vorgesehenen Dichtlippenwulst, der in unmittelbarer Nähe des freien axialen Endes der Außendichtlippe angeordnet ist. Dieser Dichtlippenwulst wird durch den in der Druckkammer 11 herrschenden Druck in Anlage mit dem Nutboden 13c gebracht und dichtet somit die Druckkammer 11 gegenüber der Nut 13 ab.

Ferner umfasst die Dichtmanschette 30 eine Innendichtlippe 34, die in Anlage mit dem in dem Gehäuse 12 des Hauptbremszylinders 10 angeordneten Druckkolben 20 gebracht wird und somit die Druckkammer 11 gegenüber dem Druckkolben 20 abdichtet.

Die Dichtmanschette 30 weist zusätzlich einen in der Schnittansicht gezeigten axialen Vorsprung auf, der als Stützring 36 bezeichnet wird auf. An dem freiem axialen Ende des Stützrings 36 sind Durchbrüche 38 vorgesehen, die einen Fluidstrom in radialer Richtung gewährleisten. Die axiale Länge des Stützrings 36 überragt die axiale Länge der Außendichtlippe 32 und die axiale Länge der Innendichtlippe 34. Der Stützring 36 ist etwa mittig zwischen der Außendichtlippe 32 und der Innendichtlippe 34 angeordnet.

Zwischen der Außendichtlippe 32 und dem Stützring 36 sowie zwischen der Innendichtlippe 34 und dem Stützring 36 sind einseitig offene Ausnehmungen vorgesehen, die zur Dichtwirkung der Dichtmanschette 30 beitragen.

Der die Außendichtlippe 32, den Stützring 36 und die Innendichtlippe 34 verbindende Abschnitt bildet an dem in Fig. 1 gezeigten rechten Ende einen Dichtmanschettenrücken 31. Der Dichtmanschettenrücken 31 ist bereichsweise eben ausgebildet. Im Bereich der Dichtfläche, die zur Anlage an den Druckkolben 20 gebracht wird, weist der Dichtmanschettenrücken 31 eine Abstufung auf. Diese Abstufung bildet einen kreisförmigen Dichtring 37 (siehe ebenso Fig. 3).

Bezugnehmend auf die Fig. 3, sind an dem Dichtmanschettenrücken 31 der Dichtmanschette 30 eine Vielzahl noppenförmiger Abstandselemente 39 vorgesehen. Die noppenförmigen Abstandselemente 39 sind im radial äußeren Bereich des Rückens 31 angeordnet. In der Fig. 3 ist ferner zu sehen, dass die noppenförmigen Abstandselemente 39 kreisförmig in gleichen Winkelabständen auf dem Dichtmanschettenrücken 31 der Dichtmanschette 30 angeordnet sind. Zwischen den Abstandselementen 39 sind Zwischenräume vorgesehen, die die nichtdichtende Funktion des Manschettenrückens 31 sicherstellen.

Die Dichtmanschette 30 gemäß der hier beschriebenen Ausführungsform ist aus einem federelastischen Material durch ein Spritzgießverfahren hergestellt. Ein besonders geeignetes Material zur Verwendung für die Dichtmanschette 30 ist beispielsweise Gummi. Die Abstandselemente 39 sind einteilig mit der Außendichtlippe 32, dem axialen Vorsprung 36, der Innendichtlippe 34 und dem Dichtring 37 ausgebildet. Der Stützring 36 ist integral mit dem Dichtelement 30 ausgebildet. Alternativ kann er auch aus einem Material hergestellt sein, das eine höhere Festigkeit hat als das Material, aus dem die Außendichtlippe 32 und die Innendichtlippe 34 gebildet sind, und an der Dichtmanschette 30 anhaftend angebracht sein.

Die Fig. 1 zeigt den Hauptbremszylinder 10 in einem drucklosen Zustand. Mit anderen Worten, der Druck in der Druckkammer 11 entspricht dem Druck im Druckmittelkanal 14 und dem Zwischenraum 16, der wiederum gleich dem Druck im Druckmittelreservoir ist. Die Nachlaufbohrungen 22 verbinden auf fluide Weise das nicht dargestellte Druckmittelreservoir mit der Druckkammer 11.

Der Druck in der Druckkammer 11 erhöht sich, sobald die Nachlaufbohrungen 22 des Druckkolbens 20 von der Innendichtlippe 34 der Dichtmanschette 30 abgedichtet sind. Der bis zu diesem Punkt zurückgelegte Weg des Druckkolbens 20 wird auch als "Leerweg" des Hauptbremszylinders 10 bezeichnet, da ein Flüssigkeitsaustausch aus dem Druckmittelreservoir und der Druckkammer 11 über den Druckmittelkanal 14, den Zwischenraum 16 und durch die Nachlaufbohrungen 22 stattfinden kann. Sobald die Nachlaufbohrungen 22 vollkommen von der Innendichtlippe 34 abgedichtet sind und der Druckkolben 20 weiter nach links in Fig. 1 verschoben wird, steigt der Druck in der Druckkammer 11, und dieser Druck bewirkt, dass die Radbremsen des Kraftfahrzeugs über eine mit der Druckkammer 11 des Hauptbremszylinders 10 verbundene Hydraulikeinheit betätigt werden. Gleichzeitig bewirkt der erhöhte Druck in dem Druckraum 11, dass die Innendichtlippe 34 über den Zustand hinaus, der durch ihre inhärente Vorspannung bedingt ist, noch stärker an die Außenoberfläche des Druckkolbens 20 sowie die Außendichtlippe 32 noch stärker gegen den Boden 13c der ringförmigen Nut 13 gepresst wird, wodurch die Druckkammer 11 gegenüber dem Reservoir 13 und dem Druckkolben 20 zuverlässig abgedichtet wird.

Beim Druckaufbau in der Druckkammer 11 wird die Druckmanschette 30 axial in Richtung auf die Wand 13b zu in 13b der ringförmigen Nut 13 verschoben. Die Abstandselemente 39 auf dem Manschettenrücken 31 der Dichtmanschette 30 stellen zwar sicher, dass ein Abstand d zwischen dem Dichtring 37 und der Wand 13b der ringförmigen Nut 13 im druckfreien Zustand aufrechterhalten bleibt. Bei steigendem Druck in der Druckkammer 11 werden die Abstandselemente 39 jedoch komprimiert, da die Druckmanschette 30 druckbedingt verlagert wird. Die Komprimierung der Abstandselemente 39 geht so weit, dass sich schließlich der Dichtring 37 an die Wand 13b anlegt und zusätzliche Dichtfunktion übernimmt.

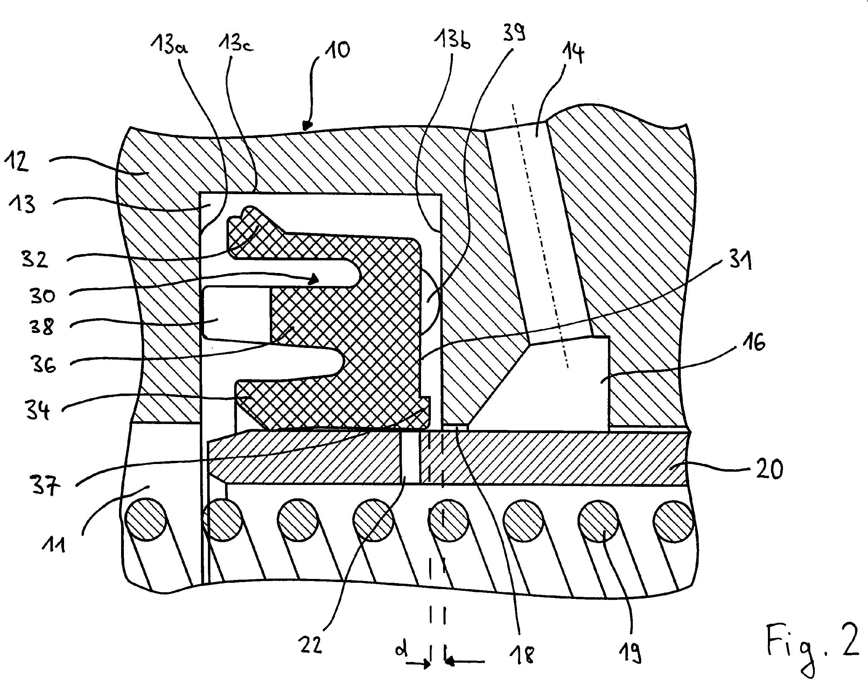

Wird nun die Bremse vom Fahrer des Kraftfahrzeugs freigegeben, so stellt sich eine Situation gemäß der Fig. 2 ein. Durch die Rückhubbewegung des Druckkolbens 20 vergrößert sich das Volumen in der Druckkammer 11, wodurch der Druck in der Druckkammer 11 rasch abnimmt. Schließlich wirkt auf die Dichtmanschette 30 von Seiten der Druckkammer 11 keine Überdrucklast mehr. Bei schneller Freigabe des Bremspedals kann es in der Druckkammer 11 dazu kommen, dass sich ein Druck einstellt, der unter dem Atmosphärendruck liegt. In diesem Fall kommt es an der Druckmanschette zu einer "Drucklastumkehr", die bewirkt, dass sich die Außendichtlippe 32 vom Boden 13c der ringförmigen Nut 13 löst. In diesem Zustand kann Druckmittel aus dem Druckmittelreservoir durch den Druckmittelkanal 14, den Zwischenbereich 16, den Durchgang 18, den Spalt bei dem Dichtring 37, zwischen den Abstandelementen 39 hindurch und an der Außendichtlippe 32 vorbei in die Druckkammer 11 gelangen. Es findet somit ein Druckausgleich zwischen dem Druckmittelreservoir und der Druckkammer 11 statt.

Dieser Druckausgleich findet bei der hier beschriebenen Dichtmanschette auch dann statt, wenn die Druckkammer 11 noch durch die Innendichtlippe 34 der Druckmanschette 30 von deren Fluidreservoir getrennt ist, da Druckmittel durch den Spalt bei 37 strömen kann, wodurch ein Überströmen der Außendichtlippe 32 gewährleistet wird. Der Druckausgleich findet auch sehr viel früher statt, als dies der Fall wäre, wenn der Dichtmanschettenrücken 31 an der Wand 13b der ringförmigen Nut 13 anliegen würde und somit ein Überströmen der Außendichtlippe 32 zu diesem Zeitpunkt noch nicht möglich wäre. Das Überströmen der Außendichtlippe 32 zu diesem frühen Zeitpunkt während der Rückhubbewegung des Druckkolbens 20 wird durch die Abstandselemente 39 sichergestellt, da zwischen den Abstandelementen 39 Zwischenräume vorgesehen sind, durch die Druckmittel strömen kann. Dieser frühzeitige Druckausgleich unterbindet ein übermäßiges Abfallen des Druckes in der Druckkammer 11 und ein schlagartiges Entlasten des Druckes beim Öffnen der Nachlaufbohrungen 22 in dem Druckkolben 20 zum Fluidreservoir.

Sollte im Verlauf der Zeit die Außendichtlippe 32 keine hinreichende Dichtfunktion mehr gewährleisten, beispielsweise aufgrund von im Druckmittel befindliche Schmutzpartikel, so gestattet ein elastisches Verformen der Abstandsnoppen 39 die Anlage des Dichtrings 37 an die Wand 13b der ringförmigen Nut 13. Der Dichtring 37 übernimmt damit die Dichtfunktion der Außendichtlippe 32, was vor allem bei hohen Drücken in der Druckkammer 11 von Bedeutung ist. Die während der elastischen Verformung gespeicherte Energie sorgt beim Unterschreiten des auf die Dichtmanschette 30 wirkenden Drucks dafür, dass sich der Dichtring 37 wieder von der Wand 13b löst, um den Abstand d zwischen dem Dichtring 37 und der Wand 13b wiederherzustellen.

Die Abstandsnoppen 39 vermeiden ein Ansaugen des Manschettenrückens 31 an die Wand 13b der ringförmigen Nut 13. Somit kann bei der Rückhubbewegung des Druckkolbens 20 das Druckmittel sehr viel früher durch den Durchgang 18 und den Spalt d an der Außendichtlippe 32 vorbei in die Druckkammer 11 gelangen, wodurch der Druckausgleich zu einem sehr viel früheren Zeitpunkt stattfindet, als dies ohne Abstandsnoppen 39 auf dem Manschettenrücken 31 der Fall wäre. Der Druckausgleich wird zu einem sehr viel früheren Zeitpunkt eingeleitet, wodurch eine schlagartige Entlastung des Drucks in der Druckkammer 11 zu dem Zeitpunkt vermieden wird, zu dem die Nachlaufbohrungen 22 in dem Druckkolben 20 von der Innendichtlippe 34 der Druckmanschette 30 freigegeben werden. Dadurch werden die beim schnellen Lösen der Bremse auftretenden strömungsakustischen Geräusche vermieden.

Der Fachmann erkennt, dass die Abstandsnoppen 39 nicht nur wie bei der hier beschriebenen Ausführungsform auf dem Manschettenrücken 31 der Dichtmanschette 30 angeordnet sein können. Vielmehr können die Abstandsnoppen 39 ebenso an der Wand 13b der ringförmigen Nut 13 vorgesehen sein. Beispielsweise können Gummisegmente in radial verlaufende Nuten in der Seitenwand 13b der ringförmigen Nut 13 eingesetzt werden, deren Höhe, gemessen von der Oberfläche der Wand 13b, die axiale Länge des Dichtrings 37 überragen sollte. Diese Gummisegmente müssten unmittelbar oberhalb des Dichtrings 37 enden, um so die redundante Dichtfunktion des Dichtrings 37 sicherzustellen.

Weiterhin müssen die Abstandsnoppen 39 nicht, wie hier gezeigt, auf dem Manschettenrücken 31 kreisförmig in gleichen Winkelabständen angeordnet sein. Andere Anordnungen der Abstandsnoppen 39 auf dem Manschettenrücken 31 sind möglich, solange sie ein Ansaugen des Manschettenrückens and die Nutwandung 13b beim Druckaufbau in der Druckkammer 11 vermeiden.

Weiterhin ist für den Fachmann ersichtlich, dass der hier beispielhaft beschriebene Hauptbremszylinder 10 sowie die in der ringförmigen Nut 13 untergebrachte Dichtmanschette 30 eine ESP- und/oder ABS-Funktionalität des Hauptbremszylinders 10 gewährleisten. So kann beispielsweise bei einem ESP-Eingriff notwendig sein, dass Druckmittel aus dem Druckmittelreservoir über den Druckmittelkanal 14, den Zwischenraum 16, durch den Durchgang 18 und an der Außendichtlippe 32 vorbei in die Druckkammer 11 nachgesaugt wird. Dies geschieht vorzugsweise mittels einer mit der Druckkammer 11 des Hauptbremszylinders 10 verbundenen Pumpe. Hierzu wird die Außendichtlippe 32 überströmt, indem die Außendichtlippe 32 in Richtung der Innendichtlippe 34 umklappt. Das Druckmittel kann zwischen die Abstandsnoppen 39 hindurchströmen und so in die Druckkammer 11 gelangen.

## Patentansprüche

1. Dichtelement (30) zur Abdichtung eines in einem Gehäuse (12) eines Bremszylinders (10) beweglich angeordneten Druckkolbens (20), das in eine in dem Gehäuse (12) vorgesehene ringförmige Nut (13) einsetzbar ist, umfassend:
eine Außendichtlippe (32) zur Anlage an einen Boden (13c) der ringförmigen Nut (13),
eine Innendichtlippe (34) zur Anlage an den Druckkolben (20), und
einen Dichtelementrücken (31), auf dem mindestens ein nichtdichtendes Abstandselement (39) vorgesehen ist,
**dadurch gekennzeichnet, dass** auf dem Dichtelementrücken (31) ein Dichtring (37) vorgesehen ist, der radial innenliegend von dem Abstandselement (39) angeordnet ist, wobei das Abstandselement (39) den Dichtring (37) in axialer Richtung überragt.

2. Dichtelement nach Anspruch 1, **dadurch gekennzeichnet, dass** das Abstandselement (39) erhaben auf dem Dichtelementrücken (31) ausgebildet ist.

3. Dichtelement nach Anspruch 1 oder 2, **dadurch gekennzeichnet, dass** das Abstandselement (39) einteilig mit dem Dichtelement (30) ausgebildet ist.

4. Dichtelement nach einem der vorhergehenden Ansprüche, **dadurch gekennzeichnet, dass** das Abstandselement (39) federelastisch ausgebildet ist.

5. Dichtelement nach einem der vorhergehenden Ansprüche, **dadurch gekennzeichnet, dass** eine Vielzahl von Abstandselementen (39) vorgesehen sind, die in gleichen Winkelabständen zueinander auf dem Dichtelementrücken (31) angeordnet sind.

6. Dichtelement nach Anspruch 5, **dadurch gekennzeichnet, dass** die Vielzahl der Abstandselemente (39) kreisförmig auf dem Dichtelementrücken (31) angeordnet sind.

7. Dichtelement nach einem der vorhergehenden Ansprüche, **dadurch gekennzeichnet, dass** zwischen der Außendichtlippe (32) und der Innendichtlippe (34) ein Stützring (36) angeordnet ist.

8. Dichtelement nach Anspruch 7, **dadurch gekennzeichnet, dass** der Stützring (36) die Außendichtlippe (32) und die Innendichtlippe (34) in axialer Richtung überragt.

9. Dichtelement nach Anspruch 7 oder 8, **dadurch gekennzeichnet, dass** wenigstens ein Durchbruch (38) an einem freien axialen Ende des Stützrings (36) angeordnet ist.

10. Bremszylinder (10), insbesondere für hydraulische Kraftfahrzeugbremsanlagen, umfassend:
mindestens einen in einem Gehäuse (12) des Bremszylinders (10) beweglich angeordneten Druckkolben (20), und
mindestens ein in einer ringförmigen Nut (13) des Gehäuses (12) vorgesehenes Dichtelement (30), wobei das Dichtelement (30) eine Außendichtlippe (32) zur Anlage an einen Boden (13c) der ringförmigen Nut (13), eine Innendichtlippe (34) zur Anlage an den Druckkolben (20) und einen Dichtelementrücken (31) aufweist, auf dem mindestens ein nichtdichtendes Abstandselement (39) vorgesehen ist, **dadurch gekennzeichnet, dass** auf dem Dichtelementrücken (31) ein Dichtring (37) vorgesehen ist, der radial innenliegend von dem Abstandselement (39) angeordnet ist, wobei das Abstandselement (39) den Dichtring (37) in axialer Richtung überragt.

11. Bremszylinder nach Anspruch 10, **dadurch gekennzeichnet, dass** das Dichtelement (30) gemäß einem der Ansprüche 2 bis 9 ausgebildet ist.

## Claims

1. A sealing element (30) for sealing a pressure piston (20) that is movably arranged in a housing (12) of a brake cylinder (10), the sealing element (30) being insertable into a ring-shaped groove (13) provided in the housing (12), comprising:
an outer sealing lip (32) for contact with a floor (13c) of the ring-shaped groove (13),
an inner sealing lip (34) for contact with the pressure piston (20), and
a sealing element back (31) on which at least one non-sealing spacer element (39) is provided,
**characterized in that** a sealing ring (37) is provided on the sealing element back (31) and is situated radially inwardly from the spacer element (39), the spacer element (39) protruding beyond the sealing ring (37) in the axial direction.

2. The sealing element according to Claim 1, **characterized in that** the spacer element (39) is elevated on the sealing element back (31).

3. The sealing element according to Claim 1 or 2, **characterized in that** the spacer element (39) is designed in one piece with the sealing element (30).

4. The sealing element according to one of the preceding claims, **characterized in that** the spacer element (39) has a spring-elastic design.

5. The sealing element according to one of the preceding claims, **characterized in that** a plurality of spacer elements (39) are provided which are situated on the sealing element back (31) at equal angular intervals relative to one another.

6. The sealing element according to Claim 5, **characterized in that** the plurality of spacer elements (39) are arranged in a circle on the sealing element back (31).

7. The sealing element according to one of the preceding claims, **characterized in that** a support ring (36) is situated between the outer sealing lip (32) and the inner sealing lip (34).

8. The sealing element according to Claim 7, **characterized in that** the support ring (36) protrudes beyond the outer sealing lip (32) and the inner sealing lip (34) in the axial direction.

9. The sealing element according to Claim 7 or 8, **characterized in that** at least one opening (38) is provided at a free axial end of the support ring (36).

10. A brake cylinder (10), in particular for hydraulic motor vehicle braking systems, comprising:
at least one pressure piston (20) that is movably arranged in a housing (12) of the brake cylinder (10), and
at least one sealing element (30) that is provided in a ring-shaped groove (13) of the housing (12), wherein the sealing element (30) has an outer sealing lip (32) for contact with a floor (13c) of the ring-shaped groove (13), an inner sealing lip (34) for contact with the pressure piston (20), and a sealing element back (31) on which at least one non-sealing spacer element (39) is provided,
**characterized in that** a sealing ring (37) is provided on the sealing element back (31) and is situated radially inwardly from the spacer element (39), the spacer element (39) protruding beyond the sealing ring (37) in the axial direction.

11. The brake cylinder according to Claim 10, **characterized in that** the sealing element (30) is designed according to one of Claims 2 to 9.

## Revendications

1. Élément d'étanchéité (30) pour étanchéifier un piston de pression (20) disposé mobile dans un boîtier (12) d'un cylindre de frein (10), lequel élément d'étanchéité peut être inséré dans une rainure annulaire (13) prévue dans le boîtier (12), comprenant :
une lèvre d'étanchéité extérieure (32) destinée à s'appliquer sur un fond (13c) de la rainure annulaire (13),
une lèvre d'étanchéité intérieure (34) destinée à s'appliquer sur le piston de pression (20), et
un dos d'élément d'étanchéité (31) sur lequel est prévu au moins un élément d'écartement non étanche (39),
**caractérisé en ce qu'**une bague d'étanchéité (37) est prévue sur le dos d'élément d'étanchéité (31), laquelle est disposée radialement à l'intérieur de l'élément d'écartement (39), l'élément d'écartement (39) s'étendant au-delà de la bague d'étanchéité (37) dans la direction axiale.

2. Élément d'étanchéité selon la revendication 1, **caractérisé en ce que** l'élément d'écartement (39) est formé en relief sur le dos d'élément d'étanchéité (31).

3. Élément d'étanchéité selon l'une des revendications 1 ou 2, **caractérisé en ce que** l'élément d'écartement (39) est formé d'une seule pièce avec l'élément d'étanchéité (30).

4. Élément d'étanchéité selon l'une des revendications précédentes, **caractérisé en ce que** l'élément d'écartement (39) est conçu élastique.

5. Élément d'étanchéité selon l'une des revendications précédentes, **caractérisé en ce qu'**il est prévu une pluralité d'éléments d'écartement (39) qui sont disposés à intervalles angulaires égaux les uns par rapport aux autres sur le dos d'élément d'étanchéité (31).

6. Élément d'étanchéité selon la revendication 5, **caractérisé en ce que** la pluralité d'éléments d'écartement (39) est disposée en cercle sur le dos d'élément d'étanchéité (31).

7. Élément d'étanchéité selon l'une des revendications précédentes, **caractérisé en ce qu'**une bague d'appui (36) est disposée entre la lèvre d'étanchéité extérieure (32) et la lèvre d'étanchéité intérieure (34).

8. Élément d'étanchéité selon la revendication 7, **caractérisé en ce que** la bague d'appui (36) s'étend au-delà de la lèvre d'étanchéité extérieure (32) et de la lèvre d'étanchéité intérieure (34) dans la direction axiale.

9. Élément d'étanchéité selon l'une des revendications 7 ou 8, **caractérisé en ce qu'**au moins une ouverture (38) est disposée à une extrémité axiale libre de la bague d'appui (36).

10. Cylindre de frein (10), en particulier pour des systèmes de freinage hydrauliques de véhicules automobiles, comprenant :
au moins un piston de pression (20) disposé mobile dans un boîtier (12) du cylindre de frein (10), et
au moins un élément d'étanchéité (30) prévu dans une rainure annulaire (13) du boîtier (12), l'élément d'étanchéité (30) présentant une lèvre d'étanchéité extérieure (32) destinée à s'appliquer sur un fond (13c) de la rainure annulaire (13), une lèvre d'étanchéité intérieure (34) destinée à s'appliquer sur le piston de pression (20) et un dos d'élément d'étanchéité (31) sur lequel est prévu au moins un élément d'écartement non étanche (39),
**caractérisé en ce qu'**une bague d'étanchéité (37) est prévue sur le dos d'élément d'étanchéité (31), laquelle est disposée radialement à l'intérieur de l'élément d'écartement (39), l'élément d'écartement (39) s'étendant au-delà de la bague d'étanchéité (37) dans la direction axiale.

11. Cylindre de frein selon la revendication 10, **caractérisé en ce que** l'élément d'étanchéité (30) est conçu selon l'une des revendications 2 à 9.
